# EUROPÄISCHE PATENTSCHRIFT

(11) **EP 1 734 045 B1**
(45) Veröffentlichungstag und Bekanntmachung des Hinweises auf die Patenterteilung: **15.08.2007**
(21) Anmeldenummer: 06110837.9
(22) Anmeldetag: 08.03.2006
(51) Int. Cl.: C07F 7/18

(54) **Verfahren zur Herstellung von Mercaptoorganyl(alkoxysilanen)**
Process for preparing mercaptoorganyl alkoxy silanes
Procédé pour la préparation des (mercaptoorganyl)-alkoxysilanes

(30) Priorität: 03.05.2005 DE 102005020535
(43) Veröffentlichungstag der Anmeldung: 20.12.2006
(73) Patentinhaber: Degussa GmbH, 40474 Düsseldorf (DE)
(72) Erfinder: Korth, Karsten, 79639 Grenzach-Wyhlen (DE); Wolf, Dorit, 61440 Oberursel (DE); Seebald, Steffen, 63796 Kahl am Main (DE); Albert, Philipp, 79539 Lörrach (DE); Pieter, Reimund, 64625 Bensheim (DE); Alig, Alfred, 63826 Geiselbach-Omersbach (DE)

(56) Entgegenhaltungen:
- EP-A- 0 672 452
- EP-A- 1 285 926
- DE-C- 915 334
- US-B1- 6 433 206

## Beschreibung

Die Erfindung betrifft ein Verfahren zur Herstellung von Mercaptoorganyl (alkoxysilanen).

Aus US 6,433,206 ist ein Verfahren zur Herstellung von siliciumhaltigen Organomercaptanen durch Hydrierung von Bis(organylsilyl)polysulfiden unter Verwendung von Gruppe VIII. Metallkatalysatoren, die durch Wasser, H₂S bzw. Alkohole vor der Vergiftung bewahrt werden müssen, bekannt.

Dieses Verfahren hat den Nachteil, dass der Umsatz ("g gebildetes Produktsilan" pro "Minute" pro "mmol katalysierendes Metall") bei energieschonenden Bedingungen relativ niedrig ist. Die bekannte Reaktion verläuft erst bei hohen und technisch wegen der hohen Materialbelastung für die Anlagen nur schwer realisierbaren Druck- und Temperaturbedingungen (>100 bar und >180°C) mit zufriedenstellendem Umsatz ab.

Aus EP 1634884 ist ein Verfahren zur Herstellung von Mercaptoorganyl(alkoxysilanen) bekannt, wobei man Bis(alkoxysilylorganyl)polysulfide bei Temperaturen von <190°C und Drücken von <100 bar mit Wasserstoff und einem Übergangsmetallkatalysator ohne Zusatz von Wasser, Alkohol oder H₂S hydriert.

Ferner ist aus EP 1637535 ein Verfahren zur Herstellung von Mercaptoorganyl(alkoxysilanen) bekannt, wobei man Bis(alkoxysilylorganyl)polysulfide in einem Lösungsmittel mit Wasserstoff und einem Übergangsmetallkatalysator ohne Zusatz von Alkoholen, H₂S oder Wasser hydriert.

Aufgabe der vorliegenden Erfindung ist es, ein Verfahren für die reduktive Spaltung von Bis(alkoxysilylorganyl)-polysulfiden zur Verfügung zu stellen, daß mindestens gleiche Umsätze bei milderen Bedingungen bezüglich Temperatur und/oder Druck als das aus US 6,433,206 bekannte Verfahren ermöglicht.

Gegenstand der Erfindung ist ein Verfahren zur Herstellung von Mercaptoorganyl(alkoxysilanen), wobei man Bis(alkoxysilylorganyl)polysulfide mit Wasserstoff in Gegenwart von mindestens einem Alkohol und einem dotierten Metallkatalysator hydriert, welches dadurch gekennzeichnet ist, dass der dotierte Metallkatalysator mindestens eine Substanz aus der Gruppe Eisen, Eisenverbindung, Nickel, Nickelverbindung, Palladium, Palladiumverbindung, Osmium, Osmiumverbindung, Ruthenium, Rutheniumverbindung, Rhodium, Rhodiumverbindung, Iridium oder Iridiumverbindung und mindestens eine Dotierungskomponente enthält.

Das Bis(alkoxysilylorganyl)polysulfid kann in dem Alkohol gelöst sein.

Das Bis (alkoxysilylorganyl) polysulfid kann eine Verbindung der allgemeinen Formel (I) sein,

Z-A-Sₓ-A-Z (I)

wobei x eine Zahl von 1 bis 14, vorzugsweise 1 bis 8, besonders bevorzugt 2 bis 4, ganz besonders bevorzugt 2,0-2,6 und 3,2-3,9, ist,
Z gleich oder verschieden SiX¹X²X³ oder Si (OCH₂-CH₂-)₃N ist und
X¹, X², X³ jeweils unabhängig voneinander bedeuten können eine lineare, verzweigte oder ringförmige Kohlenwasserstoffkette mit 1-18 Kohlenstoffatomen (C1-C18), bevorzugt mit 1-10 Kohlenstoffatomen (C1-C10), besonders bevorzugt Methyl- ,Ethyl-, Propyl- oder Butyl-,
eine lineare oder verzweigte Alkylsäuregruppe (CₐH₂ₐ₊₁)-C(=O)O- mit a=1-25, beispielsweise Acetoxy- CH₃-(C=O)O-, ein linearer oder verzweigter Alkenylsäuresubstituent (C_{b}H_{2b-1}-C(=O)O- mit b=2-25,
ein lineare oder verzweigte, substituierte Alkyl- oder Alkenylsäuregruppe,
ein unsubstituierter, halogen- oder alkylsubstituierter Cycloalkanrest mit 5-12 Kohlenstoffatomen,
ein Benzylrest,
ein halogen- oder alkylsubstituierter Phenylrest, Alkoxygruppen mit linearen und/oder verzweigten Kohlenwasserstoffketten, vorzugsweise (C₁-C₂₄) Alkoxy, besonders bevorzugt Methoxy- (CH₃O-), Ethoxy- (C₂H₅O-), Propoxy- (C₃H₇O-), Butoxy- (C₄H₉O-), Dodecyloxy- (C₁₂H₂₅O-), Tetradecyloxy- (C₁₄H₂₉O-), Hexadecyloxy- (C₁₆H₃₃O-) oder Octadecyloxy- (C₁₈H₃₇O-),
eine Cycloalkoxygruppe mit 5-12-Kohlenstoffatomen, beispielsweise Cyclohexanol,
eine halogen- oder alkylsubstituierte Phenoxygruppe oder eine Benzyloxygruppe,
eine Alkylethergruppe O- (CR^{I}₂- CR^{I}₂) -O-Alk oder Alkylpolyethergruppe O- (CR^{I}₂- CR^{I}₂O)_{y}-Alk, mit y = 2-25, bevorzugt y=2-15, besonders bevorzugt y=3-10, ganz besonders bevorzugt y=3-6, R^{I} unabhängig voneinander H oder eine Alkylgruppe, vorzugsweise eine CH₃-Gruppe, ist, Alk eine lineare oder verzweigte, gesättigte oder ungesättigte Alkylkette mit 1-30 Kohlenstoffatomen (C1-C30), bevorzugt C1-C20, besonders bevorzugt C4-C18, ganz besonders bevorzugt C8-C16, ist,
A eine lineare oder verzweigte, gesättigte oder ungesättigte aliphatische, aromatische oder gemischt aliphatische/aromatische zweibindige C₁-C₃₀ Kohlenwasserstoffkette, vorzugsweise C₁-C₄, besonders bevorzugt (-CH₂-), (-CH₂-)₂, (-CH₂-)₃, (-CH(CH₃)-CH₂-), (-CH₂-CH(CH₃)-), (-CH₂-CH₂-CH(CH₃)-) oder (-CH₂-CH(CH₃)-CH₂-), ist.

Die Alkylpolyethergruppe kann Ethylenoxid- (CH₂-CH₂-0) und Propylenoxid (CH (CH₃) -CH₂-O) oder (CH₂-CH (CH₃) -O) -Einheiten statistisch verteilt oder in Blöcken enthalten. Die Alkylpolyethergruppe O-(CR^{I}₂- CR¹₂-O)_{y}-Alk kann sein
O- (CH₂-CH₂O) ₂-C₈H₁₇, O-(CH₂-CH₂O)₃-C₈H₁₇, O-(CH₂-CH₂O)₄-C₈H₁₇, O-(CH₂-CH₂O)₅-C₈H₁₇, O-(CH₂-CH₂O)₆C₈H₁₇, O-(CH₂-CH₂O)₇-C₈H₁₇,
O-(CH(CH₃)-CH₂O)₂-C₈H₁₇, O-(CH(CH₃)-CH₂O)₃-C₈H₁₇, O-(CH(CH₃)-CH₂O)₄-C₈H₁₇, O-(CH(CH₃)-CH₂O)₅-C₈H₁₇, O-(CH(CH₃)-CH₂O)₆-C₈H₁₇, O-(CH(CH₃)-CH₂O)₇-C₈H₁₇,
O-(CH₂-CH₂O)₂-C₉H₁₉, O-(CH₂-CH₂O)₃-C₉H₁₉, O-(CH₂-CH₂O)₄-C₉H₁₉, O-(CH₂-CH₂O)₅-C₉H₁₉, O-(CH₂-CH₂O)₆-C₉H₁₉, O-(CH₂-CH₂O)₇-C₉H₁₉,
O-(CH(CH₃)-CH₂O)₂-C₉H₁₉, O-(CH(CH₃)-CH₂O)₃-C₉H₁₉, O-(CH(CH₃)-CH₂O)₄-C₉H₁₉, O-(CH(CH₃)-CH₂O)₅-C₉H₁₉, O-(CH(CH₃)-CH₂O)₆-C₉H₁₉, O-(CH(CH₃)-CH₂O)₇-C₉H₁₉,
O-(CH₂-CH₂O)₂-C₁₀H₂₁, O-(CH₂-CH₂O)₃-C₁₀H₂₁, O-(CH₂-CH₂O)₄-C₁₀H₂₁, O-(CH₂-CH₂O) ₅-C₁₀H₂₁, O- (CH₂-CH₂O) ₆-C₁₀H₂₁, O- (CH₂-CH₂O) ₇-C₁₀H₂₁ ,
O-(CH (CH₃)-CH₂O) ₂-C₁₀H₂₁, O- (CH (CH₃) -CH₂O) ₃-C₁₀H₂₁, O- (CH (CH₃) - CH₂O)₄-C₁₀H₂₁, O-(CH (CH₃) -CH₂O) ₅-C₁₀H₂₁, O-(CH (CH₃)-CH₂O)₆-C₁₀H₂₁, O-(CH(CH₃) -CH₂O)₇-C₁₀H₂₁,
O-(CH₂-CH₂O) ₂-C₁₁H₂₃, O-(CH₂-CH₂O) ₃-C₁₁H₂₃, O-(CH₂-CH₂O)₄-C₁₁H₂₃, O-(CH₂-CH₂O)₅-C₁₁H₂₃, O-(CH₂-CH₂O) ₆-C₁₁H₂₃, O-(CH₂-CH₂O)₇-C₁₁H₂₃,
O-(CH(CH₃)-CH₂O)₂-C₁₁H₂₃, O-(CH(CH₃)-CH₂O)₃-C₁₁H₂₃, O-(CH(CH₃)- CH₂O)₄-C₁₁H₂₃, O-(CH(CH₃) -CH₂O)₅-C₁₁H₂₃, O-(CH(CH₃)-CH₂O)₆-C₁₁H₂₃, O-(CH(CH₃)-CH₂O)₇-C₁₁H₂₃,
O-(CH₂-CH₂O) ₂-C₁₂H₂₅, O-(CH₂-CH₂O) ₃-C₁₂H₂₅, O-(CH₂-CH₂O)₄-C₁₂H₂₅, O-(CH₂-CH₂O)₅-C₁₂H₂₅, O-(CH₂-CH₂O) ₆-C₁₂H₂₅, O-(CH₂-CH₂O)₇-C₁₂H₂₅,
O-(CH(CH₃)-CH₂O)₂-C₁₂H₂₅, O-(CH(CH₃)-CH₂O) ₃-C₁₂H₂₅, O-(CH(CH₃)- CH₂O)₄-C₁₂H₂₅, O-(CH(CH₃)-CH₂O)₅-C₁₂H₂₅, O-(CH(CH₃)-CH₂O)₆-C₁₂H₂₅, O-(CH(CH₃)-CH₂O) ₇-C₁₂H₂₅,
O-(CH₂-CH₂O)₂-C₁₃H₂₇, O-(CH₂-CH₂O) ₃-C₁₃H₂₇, O-(CH₂-CH₂O) ₄-C₁₃H₂₇, O-(CH₂-CH₂O)₅-C₁₃H₁₇, O-(CH₂-CH₂O) ₆-C₁₃H₂₇, O-(CH₂-CH₂O)₇-C₁₃H₂₇,
O- (CH (CH₃)-CH₂O)₂-C₁₃H₂₇, O-(CH(CH₃)-CH₂O) ₃-C₁₃H₂₇, O- (CH (CH₃)- CH₂O)₄-C₁₃H₂₇, O- (CH(CH₃)-CH₂O)₅-C₁₃H₂₇, O-(CH(CH₃)-CH₂O)₆-C₁₃H₂₇, O- (CH (CH₃) -CH₂O)₇-C₁₃H₂₇,
O- (CH₂-CH₂O)₂-C₁₄H₂₉, O-(CH₂-CH₂O) ₃C₁₄H₂₉, O-(CH₂-CH₂O)₄-C₁₄H₂₉, O- (CH₂-CH₂O)₅-C₁₄H₂₉, O-(CH₂-CH₂O) ₆-C₁₄H₂₉, O-(CH₂-CH₂O)₇-C₁₄H₂₉,
O-(CH(CH₃)-CH₂O)₂-C₁₄H₂₉, O-(CH(CH₃)-CH₂O)₃-C₁₄H₂₉, O-(CH(CH₃)- CH₂O) ₄-C₁₄H₂₉, O-(CH (CH₃)-CH₂O)₅-C₁₄H₂₉, O-(CH(CH₃) -CH₂O)₆-C₁₄H₂₉, O-(CH(CH₃)-CH₂O)₇-C₁₄H₂₉,
O-(CH₂-CH₂O)₂-C₁₅H₃₁, O-(CH₂-CH₂O)₃-C₁₅H₃₁, O-(CH₂-CH₂O)₄-C₁₅H₃₁, O-(CH₂-CH₂O)₅-C₁₅H₃₁, O-(CH₂-CH₂O)₆-C₁₅H₃₁ , O-(CH₂-CH₂O)₇-C₁₅H₃₁,
O-(CH (CH₃)-CH₂O)₂-C₁₅H₃₁, O-(CH (CH₃)-CH₂O)₃-C₁₅H₃₁, O- (CH (CH₃)-CH₂O) ₄-C₁₅H₃₁, O-(CH(CH₃) -CH₂O)₅-C₁₅H₃₁, O-(CH(CH₃)-CH₂O)₆-C₁₅H₃₁, O-(CH(CH₃)-CH₂O)₇-C₁₅H₃₁,
O-(CH₂-CH₂O)₂-C₁₆H₃₃, O-(CH₂-CHO₂)₃-C₁₆H₃₃, O-(CH₂-CH₂O)₄-C₁₆H₃₃, O-(CH₂-CH₂O)₅-C₁₆H₃₃, O-(CH₂-CH₂O)₆-C₁₆H₃₃, O-(CH₂-CH₂O)₇-C₁₆H₃₃,
O-(CH (CH₃)-CH₂O)₂-C₁₆H₃₃, O-(CH(CH₃)-CH₂O)₃-C₁₆H₃₃, O-(CH(CH₃)-CH₂O)₄-C₁₆H₃₃, O-(CH (CH₃) -CH₂O)₅-C₁₆H₃₃, O-(CH(CH₃)-CH₂O)₆-C₁₆H₃₃ oder O-(CH(CH₃)-CH₂O)₇-C₁₆H₃₃.

A kann linear oder verzweigt sein und gesättigte wie auch ungesättigte Bindungen enthalten. A kann anstatt mit H mit verschiedensten Substituenten, unabhängig voneinander, substituert sein, wie zum Beispiel -CN, -SH, -NH₂, Halogenen, beispielsweise -Cl, -Br oder -F, Alkoholfunktionalitäten -OH oder Alkoxiden -O-Alkyl. Als A können CH₂, CH₂CH₂, CH₂CH₂CH₂, CH₂CH(CH₃), CH₂CH₂CH₂CH₂, CH₂CH₂CH (CH₃), CH₂CH (CH₃) CH₂, CH₂CH₂CH₂CH₂CH₂, CH₂CH (CH₃) CH₂CH₂, CH₂CH₂CH (CH₃) CH₂, CH(CH₃)CH₂CH(CH₃) oder CH₂CH(CH₃)CH(CH₃) eingesetzt werden.

Als Silan der allgemeinen Formel (I) kann man beispielsweise folgende Verbindungen verwenden:
[ (MeO) ₃Si(CH₂)₃] ₂S₂, [(MeO)₃Si (CH₂)₃]₂S₃, [(MeO)₃Si(CH₂)₃]₂S₄, [(MeO)₃Si (CH₂)₃]₂S₅, [(MeO)₃Si(CH₂)₃]₂S₆ [(MeO)₃Si(CH₂)₃]₂S₇, [(MeO)₃Si(CH₂)₃]₂S₈, [(MeO)₃Si(CH₂)₃]₂S₉, [(MeO)₃Si(CH₂)₃]₂S₁₀, [(MeO)₃Si (CH₂)₃] ₂S₁₁, [(MeO)₃Si (CH₂)₃] ₂S₁₂, [(EtO)₃Si(CH₂) 3]₂S₂, [(EtO)₃Si (CH₂)₃] ₂S₃, [(EtO)₃Si (CH₂)₃] ₂S₄, [(EtO)₃Si(CH₂)₃]₂S₅, [(EtO)₃Si (CH₂)₃] ₂S₆, [(EtO)₃Si (CH₂)₃] ₂S₇, [(EtO)₃Si(CH₂)₃] S₈, [(EtO)₃Si (CH₂)₃]₂S₉, [(EtO)₃Si (CH₂)₃]₂S₁₀, [(EtO)₃Si(CH₂)₃]₂S₁₁, [(EtO)₃Si (CH₂)₃]₂S₁₂, [(EtO)₃Sᵢ(CH₂)₃]₂S₁₃, [(EtO)₃Si (CH₂)₃]₂S₁₄, [(C₃H₇O)₃Si(CH₂)₃]₂S₂, [(C₃H₇O)₃Si (CH₂)₃]₂S₃, [(C₃H₇0)₃Si(CH₂)₃]₂S₄, [(C₃H₇O)₃Si (CH₂)₃]₂S₅, [(C₃H₇O)₃Si(CH₂)₃]₂S₆, [(C₃H₇O)₃Si (CH₂)₃]₂S₇, [(C₃H₇0)₃Si(CH₂)₃]₂S₈, [(C₃H₇O)₃Si (CH₂)₃]₂S₉, [(C₃H₇O)₃Si(CH₂)₃]₂S₁₀, C₃H₇O)₃Si (CH₂)₃]₂S₁₁, [(C₃H₇O)₃Si(CH₂)₃]₂S₁₂, [(C₃H₇O)₃Si (CH₂)₃]₂S₁₃, [(C₃H₇O)₃Si(CH₂)₃]₂S₁₄, [(C₁₂H₂₅O)(EtO)₂Si (CH₂)₃] Sₓ [(CH₂)₃Si(OEt)₃], [(C₁₂H₂₅O)₂ (EtO)Si(CH₂)₃] Sₓ [ (CH₂) ₃Si (OEt)₃], [(C₁₂H₂₅O)₃Si(CH₂) ₃]Sₓ [ (CH₂) ₃Si (OEt) ₃], [(C₁₂H₂₅O) (EtO)₂Si (CH₂)₃]Sₓ [ (CH₂) ₃Si (C₁₂H₂₅O) (OEt)₂], [(C₁₂H₂₅O)₂ (EtO)Si(CH₂)₃ Sₓ [ (CH₂) ₃Si (C₁₂H₂₅O) (OEt)₂], [(C₁₂H₂₅O)₃Si (CH₂) ₃] Sₓ [ (CH₂) ₃Si (C₁₂H₂₅O) (OEt)₂], [(C₁₂H₂₅O)(EtO) ₂Si(CH₂)₃]Sₓ [(CH₂)₃Si(C₁₂H₂₅O)₂ (OEt) ], [(C₁₂H₂₅O)₂ (EtO)Si(CH₂) ₃] Sₓ [ (CH₂)₃Si (C₁₂H₂₅O)₂ (OEt) ], [(C₁₂H₂₅O)₃Si (CH₂) ₃] Sₓ [ (CH₂)₃Si (C₁₂H₂₅O)₂ (OEt) ], [(C₁₂H₂₅O)(EtO)₂Si (CH₂)₃] Sₓ [ (CH₂)₃Si(C₁₂H₂₅O)₃], [(C₁₂H₂₅O)₂ (EtO) Si (CH₂)₃]Sₓ[(CH₂)₃Si(C₁₂H₂₅O)₃], [(C₁₂H₂₅O)₃Si (CH₂)₃]Sₓ[(CH₂)₃Si(C₁₂H₂₅O)₃], (C₁₄H₂₉O)(EtO)₂Si (CH₂)₃] Sₓ [ (CH₂) ₃Si (OEt)₃], [(C₁₄H₂₉O)₂ (EtO) Si (CH₂)₃] Sₓ [ (CH₂) ₃Si (OEt)₃], [(C₁₄H₂₉O)₃Si(CH₂) ₃]Sₓ [ (CH₂) ₃Si (OEt) ₃], [(C₁₄H₂₉O) (EtO)₂Si(CH₂)₃] Sₓ [(CH₂)₃S (C₁₄H₂₉O)(OEt)₂], [(C₁₄H₂₉O)₂(EtO)Si(CH₂)₃] Sₓ [(CH₂)₃Si(C₁₄H₂₉O)(OEt)₂], [(C₁₄H₂₉O)₃Si(CH₂)₃]Sₓ [ (CH₂) ₃Si (C₁₄H₂₉O) (OEt)₂], [(C₁₄H₂₉O) (EtO)₂Si (CH₂)₃]Sₓ[(CH₂)₃Si(C₁₄H₂₉O)₂ (OEt) ], [(C₁₄H₂₉O)₂(EtO)Si(CH₂)₃]Sₓ [ (CH₂)₃Si (C₁₄H₂₉O)(OEt)], [(C₁₄H₂₉O)₃Si(CH₂)_{3]}Sₓ [(CH₂) ₃Si (C₁₄H₂₉O)₂ (OEt)], [(C₁₄H₂₉O)(EtO)₂Si (CH₂) _{3]} Sₓ [(CH₂) ₃Si (C₁₄H₂₉O)_{3]}, [(C₁₄H₂₉O)₂(EtO)Si(CH₂)₃]Sₓ [(CH₂)₃Si(C₁₄H₂₉O)₃], [(C₁₄H₂₉O)₃Si(CH₂)₃]Sₓ [(CH₂)₃Si(C₁₄H₂₉O)₃], [(C₁₆H₃₃O) (Et0)₂Si(CH₂)_{3]} Sₓ [(CH₂)₃Si (OEt)₃], [(C₁₆H₃₃O)₂ (EtO)Si(CH₂)₃] Sₓ[(CH₂)₃Si(OEt)₃], [(C₁₆H₃₃O)₃Si(CH₂)₃]Sₓ[ (CH₂)₃Si(OEt)₃], [(C₁₆H₃₃O)(Et0)₂Si(CH₂)₃]Sₓ[(CH₂)₃Si (C₁₆H₃₃O)(OEt)₂], [(C₁₆H₃₃O)₂(EtO)Si(CH₂)₃]Sₓ[ (CH₂) ₃Si (C₁₆H₃₃O)(OEt)₂], [(C₁₆H₃₃O)₃Si(CH₂)₃]Sₓ [(CH₂) ₃Si (C₁₆H₃₃O) (OEt)₂], [(C₁₆H₃₃O)(EtO)₂Si (CH₂)₃] Sₓ (CH₂) ₃Si(C₁₆H₃₃O)₂(OEt)], [(C₁₆H₃₃O)₂ (EtO) Si (CH₂)₃] Sₓ [(CH₂) ₃Si(C₁₆H₃₃O)₃(OEt)], [(C₁₆H₃₃O)₃Si (CH₂)₃] Sₓ [ (CH₂) ₃Si(C₁₆H₃₃O) ₂ (OEt) ], [(C₁₆H₃₃O) (EtO)₂Si(CH₂) ₃] Sₓ [ (CH₂)₃Si (C₁₆H₃₃O)₃], [(C₁₆H₃₃O)₂ (EtO)Si(CH₂) ₃] Sₓ[(CH₂)₃Si (C₁₆H₃₃O)₃], [(C₁₆H₃₃O)₃Si(CH₂) ₃] Sₓ [(CH₂) ₃Si (C₁₆H₃₃O)₃], [(C₁₈H₃₇O)(EtO)₂Si (CH₂) ₃] Sₓ [ (CH₂) ₃Si (OEt)₃] , [(C₁₈H₃₇O)₂(Et(Si(CH₂)₃]Sₓ[(CH₂)₃Si (OEt)₃] , [(C₁₈H₃₇O) ₃Si (CH₂) ₃] Sₓ [ (CH₂)₃Si (OEt)₃] , [(C₁₈H₃₇O) (EtO)₂Si (CH₂) ₃] Sₓ [ (CH₂) ₃Si (C₁₅H₃₇O) (OEt) ₂] , [(C₁₈H₃₇O)₂(EtO)Si(CH₂)₃]Sₓ [ (CH₂) ₃Si (C₁₈H₃₇O) (OEt)₂] , [(C₁₈H₃₇O) ₃Si (CH₂) ₃] Sₓ [ (CH₂) ₃Si (C₁₈H₃₇O) (OEt)₂], [(C₁₈H₃₇O) (EtO) ₂Si (CH₂) ₃] Sₓ [ (CH₂) ₃Si (C₁₈H₃₇O)₂ (OEt ], [(C₁₈H₃₇O)₂(EtO)Si(CH₂)₃]Sₓ [ (CH₂) ₃Si (C₁₈H₃₇O) (OEt)], [(C₁₈H₃₇O)₃Si(CH₂)₃]Sₓ [ (CH₂) ₃Si (C₁₈H₃₇O)₂ (OEt ] , [(C₁₈H₃₇O)(EtO) ₂Si (CH₂) ₃] Sₓ [ (CH₂) ₃Si (C₁₈H₃₇O)₃], [(C₁₈H₃₇O)₂(EtO)Si(CH₂)₃]Sₓ [(CH₂)₃Si(C₁₈H₃₇O)₃], [(C₁₈H₃₇O)₃Si(CH₂)₃]Sₓ[ (CH₂) ₃Si (C₁₈H₃₇O)₃]

Die als Ausgangsstoff eingesetzten Bis(alkoxysilylorganyl)-polysulfide können eine Mischung aus verschiedenen Bis(alkoxysilylorganyl)polysulfiden mit -S₁- bis -S₁₄- (x=1-14) oder ein reines Bis(alkoxysilylorganyl)polysulfid mit x 2-14 sein.

Als Bis(alkoxysilylorganyl)polysulfide können Verbindungen oder Gemische von Verbindungen mit einer mittleren Schwefelkettenlänge von 2,0 bis 4,0 eingesetzt werden. Die mittlere Schwefelkettenlänge für Bis(alkoxysilylorganyl)-polysulfide kann als arithmetisches Mittel aus S₂ bis S₁₄, gemessen mit HPLC, bestimmt werden.

Vorzugsweise können als Bis(alkoxysilylorganyl)polysulfide Verbindungen mit einer mittleren Kettenlänge von Sₓ = S_{2, 0} bis S_{2, 6} und Sₓ = S_{3, 2} bis S_{3,9} eingesetzt werden.

Besonders bevorzugt können Bis(alkoxysilylorganyl)disulfide mit einer mittleren Kettenlänge von 2,0 bis 2,6 eingesetzt werden, da im Vergleich zu Bis(alkoxysilylorganyl)-polysulfiden mit Sₓ = S_{2,7} bis S_{3,9} höhere Umsätze in g Produkt/min/mmol Katalysator erreicht und weniger H₂S freisetzt werden können.

Die Gruppe Z = -SiX¹X²X³ kann in Formel I vorzugsweise -Si(OMe)₃, -Si(OEt)₃, -SiMe(OMe)₂, -SiMe(OEt)₂), - SiMe₂(OMe), -SiMe₂(OEt), -Si[-O(CO)CH₃]₃, -Si(OC₁₂H₂₅)₃, Si(OC₁₄H₂₉)₃, Si(OC₁₆H₃₃) ₃, Si (OC₁₈H₃₇) ₃, Si(OC₁₄H₂₉)₂(OC₁₆H₃₃), Si(OC₁₄H₂₉)₂(OC₁₈H₃₇), Si(OC₁₆H₃₃)₂(OC₁₄H₂₉), Si(OC₁₆H₃₃)₂(OC₁₈H₃₇), Si(OC₁₈H₃₇)₂(OC₁₆H₃₃) oder Si(OC₁₄H₂₉) (OC₁₈H₃₇)₂ sein.

Das gebildete Mercaptoorganyl(alkoxysilan) kann eine Verbindung der allgemeinen Formel (II)

W-A-SH (II)

sein, wobei W = -SiY¹Y²Y³ oder Si (OCH₂-CH₂-) ₃N, mit Y¹, Y², Y³ unabhängig voneinander X¹, X², X³ oder Hydroxy (-OH) sein kann und X¹, X², X³ und A, jeweils unabhängig voneinander, die Bedeutung gemäß Formel (I) haben.

Die Gruppe W = -SiY¹Y²Y³ kann in Formel II vorzugsweise -Si(OMe)₃, -Si(OMe)₂OH, -Si(OMe)(OH)₂, -Si(OEt)₃, - Si(OEt)₂OH, -Si(Et) (OH)₂, -SiMe (OMe)₂, -SiMe (OEt)₂), - SiMe(OH)₂, -SiMe₂(OMe), -SiMe₂(OEt), SiMe₂ (OH), -Si[-O (CO)CH₃]₃, -Si (OC₁₂H₂₅)₃, Si (OC₁₄H₂₉)₃, Si(C₁₆H₃₃)₃, Si (OC₁₈H₃₇)₃, Si (OC₁₄H₂₉)₂(OC₁₆H₃₃), Si(OC₁₄H₂₉)₂(OC₁₈H₃₇), Si (OC₁₆H₃₃)₂(OC₁₄H₂₉) , Si (OC₁₆H₃₃) ₂ (OC₁₈H₃₇) , Si(OC₁₈H₃₇)₂(OC₁₆H₃₃) oder Si(OC₁₄H₂₉) (OC₁₈H₃₇) ₂ sein.

Beispielsweise können Mercaptoorganyl(alkoxysilane) der allgemeinen Formel (II) sein:
3-Mercaptopropyl(trimethoxysilan),
3-Mercaptopropyl(dimethoxyhydroxysilan),
3-Mercaptopropyl(triethoxysilan),
3-Mercaptopropyl(diethoxyhydroxysilan),
3-Mercaptopropyl(diethoxymethoxysilan),
3-Mercaptopropyl(tripropoxysilan),
3-Mercaptopropyl(dipropoxymethoxysilan),
3-Mercaptopropyl(dipropoxyhydroxysilan),
3-Mercaptopropyl(tridodecanoxysilan),
3-Mercaptopropyl(didodecanoxyhydroxysilan),
3-Mercaptopropyl(tritetradecanoxysilan),
3-Mercaptopropyl(trihexadecanoxysilan),
3-Mercaptopropyl(trioctadecanoxysilan),
3-Mercaptopropyl(didodecanoxy)tetradecanoxysilan,
3-Mercaptopropyl(dodecanoxy) tetradecanoxy (hexadecanoxy) silan,
3-Mercaptopropyl(dimethoxymethylsilan),
3-Mercaptopropyl(methoxymethylhydroxysilan),
3-Mercaptopropyl(methoxydimethylsilan),
3-Mercaptopropyl(hydroxydimethylsilan),
3-Mercaptopropyl(diethoxymethylsilan),
3-Mercaptopropyl(ethoxyhydroxymethylsilan),
3-Mercaptopropyl(ethoxydimethylsilan),
3-Mercaptopropyl(dipropoxymethylsilan),
3-Mercaptopropyl(propoxymethylhydroxysilan),
3-Mercaptopropyl(propoxydimethylsilan),
3-Mercaptopropyl(diisopropoxymethylsilan),
3-Mercaptopropyl(isopropoxydimethylsilan),
3-Mercaptopropyl(dibutoxymethylsilan),
3-Mercaptopropyl(butoxydimethylsilan),
3-Mercaptopropyl(disiobutoxymethylsilan),
3-Mercaptopropyl(siobutoxymethylhydroxysilan),
3-Mercaptopropyl(isobutoxydimethylsilan),
3-Mercaptopropyl(didodecanoxymethylsilan),
3-Mercaptopropyl(dodecanoxydimethylsilan),
3-Mercaptopropyl(ditetradecanoxymethylsilan),
3-Mercaptopropyl(tetradecanoxymethylhydroxysilan),
3-Mercaptopropyl(tetradecanoxydimethylsilan),
2-Mercaptoethyl(trimethoxysilan),
2-Mercaptoethyl(triethoxysilan),
2-Mercaptoethyl(diethoxymethoxysilan),
2-Mercaptoethyl(tripropoxysilan),
2-Mercaptoethyl(dipropoxymethoxysilan),
2-Mercaptoethyl(tridodecanoxysilan),
2-Mercaptoethyl(tritetradecanoxysilan),
2-Mercaptoethyl(trihexadecanoxysilan),
2-Mercaptoethyl(trioctadecanoxysilan),
2-Mercaptoethyl(didodecanoxy) tetradecanoxysilan,
2-Mercaptoethyl(dodecanoxy)tetradecanoxy(hexadecanoxy) silan,
2-Mercaptoethyl(dimethoxymethylsilan),
2-Mercaptoethyl(methoxymethylhydroxysilan),
2-Mercaptoethyl(methoxydimethylsilan),
2-Mercaptoethyl(diethoxymethylsilan),
2-Mercaptoethyl(ethoxydimethylsilan),
2-Mercaptoethyl(hydroxydimethylsilan),
1-Mercaptomethyl(trimethoxysilan),
1-Mercaptomethyl(triethoxysilan),
1-Mercaptomethyl(diethoxymethoxysilan),
1-Mercaptomethyl(diethoxyhydroxysilan),
1-Mercaptomethyl(dipropoxymethoxysilan),
1-Mercaptomethyl(tripropoxysilan),
1-Mercaptomethyl(trimethoxysilan),
1-Mercaptomethyl(dimethoxymethylsilan),
1-Mercaptomethyl(methoxydimethylsilan),
1-Mercaptomethyl(diethoxymethylsilan),
1-Mercaptomethyl(ethoxymethylhydroxysilan),
1-Mercaptomethyl(ethoxydimethylsilan),
3-Mercaptobutyl(trimethoxysilan),
3-Mercaptobutyl(triethoxysilan),
3-Mercaptobutyl(diethoxymethoxysilan),
3-Mercaptobutyl(tripropoxysilan),
3-Mercaptobutyl(dipropoxymethoxysilan),
3-Mercaptobutyl(dimethoxymethylsilan),
3-Mercaptobutyl(diethoxymethylsilan),
3-Mercaptobutyl(dimethylmethoxysilan),
3-Mercaptobutyl(dimethylethoxysilan),
3-Mercaptobutyl(dimethylhydroxysilan),
3-Mercaptobutyl(tridodecanoxysilan),
3-Mercaptobutyl(tritetradecanoxysilan),
3-Mercaptobutyl(trihexadecanoxysilan),
3-Mercaptobutyl(didodecanoxy)tetradecanoxysilan,
3-Mercaptobutyl(dodecanoxy) tetradecanoxy (hexadecanoxy) silan,
3-Mercapto-2-methyl-propyl(trimethoxysilan),
3-Mercapto-2-methyl-propyl(triethoxysilan),
3-Mercapto-2-methyl-propyl(diethoxymethoxysilan),
3-Mercapto-2-methyl-propyl(tripropoxysilan),
3-Mercapto-2-methyl-propyl(dipropoxymethoxysilan),
3-Mercapto-2-methyl-propyl(tridodecanoxysilan),
3-Mercapto-2-methyl-propyl(tritetradecanoxysilan),
3-Mercapto-2-methyl-propyl(trihexadecanoxysilan),
3-Mercapto-2-methyl-propyl(trioctadecanoxysilan),
3-Mercapto-2-methyl-propyl(didodecanoxy) tetradecanoxysilan,
3-Mercapto-2-methyl-propyl(dodecanoxy)tetradecanoxy-(hexadecanoxy)silan,
3-Mercapto-2-methyl-propyl(dimethoxymethylsilan),
3-Mercapto-2-methyl-propyl(methoxydimethylsilan),
3-Mercapto-2-methyl-propyl(diethoxymethylsilan),
3-Mercapto-2-methyl-propyl(ethoxydimethylsilan),
3-Mercapto-2-methyl-propyl(hydroxydimethylsilan),
3-Mercapto-2-methyl-propyl (dipropoxymethylsilan),
3-Mercapto-2-methyl-propyl(propoxydimethylsilan),
3-Mercapto-2-methyl-propyl(diisopropoxymethylsilan),
3-Mercapto-2-methyl-propyl(isopropoxydimethylsilan),
3-Mercapto-2-methyl-propyl(dibutoxymethylsilan),
3-Mercapto-2-methyl-propyl(butoxydimethylsilan),
3-Mercapto-2-methyl-propyl(disiobutoxymethylsilan),
3-Mercapto-2-methyl-propyl(isobutoxydimethylsilan),
3-Mercapto-2-methyl-propyl(didodecanoxymethylsilan),
3-Mercapto-2-methyl-propyl(dodecanoxydimethylsilan),
3-Mercapto-2-methyl-propyl(ditetradecanoxymethylsilan),
3-Mercapto-2-methyl-propyl(tetradecanoxydimethylsilan),
[(C₉H₁₉O-(CH₂-CH₂O)₂] (MeO)₂Si(CH₂)₃SH,
[(C₉H₁₉O-(CH₂-CH₂O)₃] (MeO)₂Si(CH₂)₃SH,
[(C₉H₁₉O-(CH₂-CH₂O)₄] (MeO)₂Si(CH₂)₃SH,
[(C₉H₁₉O-(CH₂-CH₂O)₅] (MeO)₂Si(CH₂)₃SH,
[(C₉H₁₉O-(CH₂-CH₂O)₆] (MeO)₂Si(CH₂)₃SH,
[(C₁₂H₂₅O-(CH₂-CH₂O)₂] (MeO)₂Si(CH₂)₃SH,
[(C₁₂H₂₅O-(CH₂-CH₂O)₃] (MeO)₂Si(CH₂)₃SH,
[(C₁₂H₂₅O-(CH₂-CH₂O)₄] (MeO)₂Si(CH₂)₃SH,
[(C₁₂H₂₅O-(CH₂-CH₂O)₅] (MeO)₂Si(CH₂)₃SH,
[(C₁₂H₂₅O-(CH₂-CH₂O)₆] (MeO)₂Si(CH₂)₃SH,
[(C₁₃H₂₇O-(CH₂-CH₂O)₂] (MeO)₂Si(CH₂)₃SH,
[(C₁₃H₂₇O-(CH₂-CH₂O)₃] (MeO)₂Si(CH₂)₃SH,
[(C₁₃H₂₇O-(CH₂-CH₂O)₄] (MeO) ₂Si(CH₂)₃SH,
[(C₁₃H₂₇O-(CH₂-CH₂O)₅] (MeO)₂Si(CH₂)₃SH,
[(C₁₃H₂₇O-(CH₂-CH₂O)₆] (MeO)₂Si(CH₂)₃SH,
[(C₁₄H₂₉O-(CH₂-CH₂O)₂] (MeO)₂Si(CH₂)₃SH,
[(C₁₄H₂₉O-(CH₂-CH₂O)₃] (MeO) ₂Si(CH₂)₃SH,
[(C₁₄H₂₉O-(CH₂-CH₂O)₄] (MeO)₂Si(CH₂)₃SH,
[(C₁₄H₂₉O-(CH₂-CH₂O)₅] (MeO)₂Si(CH₂)₃SH,
[(C₁₄H₂₉O-(CH₂-CH₂O)₆] (MeO)₂Si(CH₂)₃SH,
[(C₉H₁₉O-(CH₂-CH₂O)₂]₂ (MeO)Si(CH₂)₃SH,
[(C₉H₁₉O-(CH₂-CH₂O)₃] (MeO)Si(CH₂) ₃SH,
[(C₉H₁₉O-(CH₂-CH₂O)₄]₂ (MeO)Si (CH₂)₃SH,
[(C₉H₁₉O-(CH₂-CH₂O)₅]₂(MeO)Si (CH₂)₃SH,
[(C₉H₁₉O-(CH₂-CH₂O)₆]₂(MeO)Si(CH₂)₃SH,
[(C₁₂H₂₅O-(CH₂-CH₂O)₂]₂ (MeO)Si (CH₂) ₃SH,
[(C₁₂H₂₅O-(CH₂-CH₂O)₃]₂ (MeO)Si (CH₂)₃SH,
[(C₁₂H₂₅O-CH₂-CH₂O)₄]₂ (MeO)Si(CH₂)₃SH,
[(C₁₂H₂₅O-(CH₂-CH₂O)₅]₂ (MeO)Si(CH₂)₃SH,
[(C₁₂H₂₅O-(CH₂-CH₂O)₆]₂ (MeO)Si(CH₂)₃SH,
[(C₁₃H₂₇O-(CH₂-CH₂O)₂]₂ (MeO)Si(CH₂)₃SH,
[(C₁₃H₂₇O-(CH₂-CH₂O)₃]₂ (MeO)Si(CH₂)₃SH,
[(C₁₃H₂₇O-(CH₂-CH₂O)₄]₂ (MeO)Si(CH₂)₃SH,
[(C₁₃H₂₇O- (CH₂-CH₂O)₅]₂ (MeO)Si(CH₂)₃SH,
[(C₁₃H₂₇O-(CH₂-CH₂O)₆]₂ (MeO)Si(CH₂)₃SH,
[(C₁₄H₂₉O-(CH₂-CH₂O)₂]₂ (MeO)Si(CH₂)₃SH,
[(C₁₄H₂₉O-(CH₂-CH₂O)₃]₂ (MeO)Si(CH₂)₃SH,
[(C₁₄H₂₉O-(CH₂-CH₂O)₄]₂ (MeO)Si(CH₂)₃SH,
[(C₁₄H₂₉O-(CH₂-CH₂O)₅]₂ (MeO)Si(CH₂)₃SH,
[(C₁₄H₂₉O-(CH₂-CH₂O)₆]₂ (MeO)Si(CH₂)₃SH,
[(C₉H₁₉O-(CH₂-CH₂O)₂] (EtO)₂Si (CH₂)₃SH,
[(C₉H₁₉O-(CH₂-CH₂O)₃] (EtO)₂Si (CH₂) ₃SH,
[(C₉H₁₉O-(CH₂-CH₂O)₄] (EtO)₂Si(CH₂) ₃SH,
[(C₉H₁₉O-(CH₂-CH₂O)₅] (EtO)₂Si(CH₂)₃SH,
[(C₉H₁₉O-(CH₂-CH₂O)₆] (EtO)₂Si(CH₂)₃SH,
[(C₁₂H₂₅O-(CH₂-CH₂O)₂] (EtO)₂Si(CH₂)₃SH,
[(C₁₂H₂₅O-(CH₂-CH₂O) ₃] (EtO)₂Si(CH₂)₃SH,
[(C₁₂H₂₅O-(CH₂-CH₂O)₄] (EtO)₂Si(CH₂)₃SH,
[(C₁₂H₂₅O-(CH₂-CH₂O)₅] (EtO)₂Si(CH₂)₃SH,
[(C₁₂H₂₅O-(CH₂-CH₂O)₆] (EtO)₂Si(CH₂)₃SH,
[(C₁₃H₂₇O-(CH₂-CH₂O)₂] (EtO)₂Si (CH₂)₃SH,
[(C₁₃H₂₇O-(CH₂-CH₂O) ₃] (EtO)₂Si (CH₂)₃SH,
[(C₁₃H₂₇O-(CH₂-CH₂O) ₄] (EtO)₂Si (CH₂)₃SH,
[(C₁₃H₂₇O-(CH₂-CH₂O)₅] (EtO)₂Si(CH₂)₃SH,
[(C₁₃H₂₇O-(CH₂-CH₂O)₆] (EtO)₂Si (CH₂)₃SH,
[(C₁₄H₂₉O-(CH₂-CH₂O)₂] (EtO)₂Si (CH₂)₃SH,
[(C₁₄H₂₉O-(CH₂-CH₂O)₃] (EtO)₂Si (CH₂)₃SH,
[(C₁₄H₂₉O-(CH₂-CH₂O)₄] (EtO)₂S1 (CH₂)₃SH,
[(C₁₄H₂₉O-(CH₂-CH₂O)₅] (EtO)₂Si (CH₂)₃SH,
[(C₁₄H₂₉O-(CH₂-CH₂O)₆] (EtO)₂Si (CH₂)₃SH,
[(C₃H₁₉O-(CH₂-CH₂O)₂]₂ (EtO) Si (CH₂)₃SH,
[(C₉H₁₉O-(CH₂-CH₂O)₃]₂ (EtO) Si (CH₂)₃SH,
[(C₉H₁₉O-(CH₂-CH₂O)₄]₂ (EtO) Si (CH₂)₃SH,
[(C₉H₁₉O-(CH₂-CH₂O)₅]₂ (EtO) Si (CH₂)₃SH,
[(C₉H₁₉O-(CH₂-CH₂O)₆]₂ (EtO) Si (CH₂)₃SH,
[(C₁₂H₂₅O-(CH₂-CH₂O)₂]₂ (EtO) Si (CH₂)₃SH,
[(C₁₂H₂₅O-(CH₂-CH₂O)₃]₂(EtO) Si (CH₂)₃SH,
[(C₁₂H₂₅O-(CH₂-CH₂O)₄]₂ (EtO) Si (CH₂)₃SH,
[(C₁₂H₂₅O-(CH₂-CH₂O)₅]₂ (EtO) Si (CH₂)₃SH,
[(C₁₂H₂₅O-(CH₂-CH₂O)₆]₂ (EtO) Si (CH₂)₃SH,
[(C₁₃H₂₇O-(CH₂-CH₂O)₂]₂ (EtO) Si (CH₂)₃SH,
[(C₁₃H₂₇O-(CH₂-CH₂O)₃]₂ (EtO) Si (CH₂)₃SH,
[(C₁₃H₂₇O-(CH₂-CH₂O)₄]₂ (EtO) Si (CH₂)₃SH,
[(C₁₃H₂₇O-(CH₂-CH₂O)₅]₂ (EtO) Si (CH₂)₃SH,
[(C₁₃H₂₇O-(CH₂-CH₂O)₆]₂ (EtO) Si (CH₂)₃SH,
[(C₁₄H₂₉O-(CH₂-CH₂O)₂]₂ (EtO) Si (CH₂)₃SH,
[(C₁₄H₂₉O-(CH₂-CH₂O)₃]₂ (EtO) Si (CH₂)₃SH,
[(C₁₄ H₂₉O-(CH₂-CH₂O)₄]₂ (EtO) Si (CH₂)₃SH,
[(C₁₄H₂₉O-(CH₂-CH₂O)₅]₂ (EtO) Si (CH₂)₃SH,
[(C₁₄H₂₉O-(CH₂-CH₂O)₆]₂ (EtO) Si (CH₂)₃SH,
[(C₉H₁₉O-(CH₂-CH₂O)₂]₃Si (CH₂) ₃SH,
[(C₉H₁₉O-(CH₂-CH₂O)₃] ₃Si(CH₂)₃SH,
[(C₉H₁₉O-(CH₂-CH₂O)₄] ₃Si(CH₂)₃SH,
[(C₉H₁₉O-(CH₂-CH₂O)₅] ₃Si(CH₂)₃SH,
[(C₉H₁₉O-(CH₂-CH₂O)₆] ₃Si(CH₂)₃SH,
[(C₁₂H₂₅O-(CH₂-CH₂O)₂] ₃Si(CH₂)₃SH,
[C₁₂H₂₅O-(CH₂-CH₂O)₃] ₃Si(CH₂)₃SH,
[(C₁₂H₂₅O-(CH₂CH₂O)₄] ₃Si(CH₂)₃SH,
[(C₁₂H₂₅O-(CH₂-CH₂O)₅] ₃Si(CH₂)₃SH,
[(C₁₂H₂₅O-(CH₂-CH₂O)₆] ₃Si(CH₂)₃SH,
[(C₁₃H₂₇O-(CH₂-CH₂O)₂] ₃Si(CH₂)₃SH,
[C₁₃H₂₇O-(CH₂-CH₂O)₃] ₃Si(CH₂)₃SH,
[(C₁₃H₂₇O-(CH₂-CH₂O)₄] ₃Si(CH₂)₃SH,
[(C₁₃H₂₇O-(CH₂-CH₂O)₅] ₃Si(CH₂)₃SH,
[(C₁₃H₂₇O-(CH₂-CH₂O)₆] ₃Si(CH₂)₃SH,
[(C₁₄H₂₉O-(CH₂-CH₂O)₂] ₃Si(CH₂)₃SH,
[(C₁₄H₂₉O-(CH₂-CH₂O)₃] ₃Si(CH₂)₃SH,
[(C₁₄H₂₉O-(CH₂-CH₂O)₄] ₃Si(CH₂)₃SH,
[(C₁₄H₂₉O-(CH₂-CH₂O)₅] ₃Si(CH₂)₃SH,
[(C₁₄H₂₉O-(CH₂-CH₂O)₆] ₃Si(CH₂)₃SH oder
HS-CH₂-CH₂-CH₂-Si (OCH₂-CH₂-) ₃N.

Der Alkohol kann in einem Anteil von 0,01 bis 95 Gew.-%, bevorzugt von 0,1 bis 60 Gew.-%, besonders bevorzugt von 0,1 bis 40 Gew.-%, ganz besonders bevorzugt von 0,1 bis 30 Gew.-%, außerordentlich bevorzugt von 1 bis 5 Gew.-%, bezogen auf das Gesamtgewicht von Bis(alkoxysilylorganyl)-polysulfiden und Alkohol, eingesetzt werden.

Der verwendete Alkohol kann eine Mischung von Alkoholen sein.

Der Alkohol kann einen Siedepunkt von 50°C bis 280°C, vorzugsweise 50-150°C, besonders bevorzugt 50-120°C, haben.

Der Alkohol kann ein primärer, sekundärer oder tertiärer Alkohol, Alkyletheralkohol HO-(CR^{I}₂-CR^{I}₂) -O-Alk oder Alkylpolyetheralkohol HO-(CR^{I}₂-CR^{I}₂O)_{y}-Alk sein.

Als primäre, sekundäre oder tertiäre Alkohole können Methanol, Ethanol, n-Propanol, i-Propanol, i-Butanol, n-Butanol, t-Butanol, Dodecanol, Tetradecanol, Hexadecanol oder Octadecanol eingesetzt werden.

Alkylpolyetheralkohole können sein:
HO-(CH₂-CH₂-O)₂-C₆H₁₃, HO- CH₂-CH₂-O)₃-C₆H₁₃, HO-(CH₂-CH₂-O)₄-C₆H₁₃, HO-(CH₂-CH₂-O)₅-C₆H₁₃, HO- (CH₂-CH₂-O) ₆-C₆H₁₃ HO- (CH₂-CH₂-O)₇-C₆H₁₃, HO- (CH₂-CH₂-O)₈-C₆H₁₃, HO- (CH₂-CH₂-O)₉-C₆H₁₃,
HO-(CH₂-CH₂-O) ₂-C₁₀H₂₁, HO- (CH₂-CH₂-O)₃-C₁₀H₂₁, HO-(CH₂-CH₂-O) ₄-C₁₀H₂₁, HO- (CH₂-CH₂-O)₅-C₁₀H₂₁, HO-(CH₂-CH₂-O)₆-C₁₀H₂₁, HO-(CH₂-CH₂-O)₇-C₁₀H₂₁, HO- (CH₂-CH₂-O)₈-C₁₀H₂₁, HO- (CH₂-CH₂-O)₉-C₁₀H₂₁,
HO- (CH₂-CH₂-O)₂-C₁₃H₂₇, HO-(CH₂-CH₂-O)₃-C₁₃H₂₇, HO- (CH₂-CH₂-O) 4-C₁₃H₂₇, HO-(CH₂-CH₂-O)₅-C₁₃H₂₇, HO- (CH₂-CH₂-O)₆-C₁₃H₂₇, HO-(CH₂-CH₂-O)₇C₁₃H₂₇, HO- (CH₂-CH₂-O)₈-C₁₃H₂₇, HO- (CH₂-CH₂-O)₉-C₁₃H₂₇,
HO- (CH₂-CH₂-O)₂-C₁₄H₂₉, HO- (CH₂-CH₂-O)₃-C₁₄H₂₉, HO- (CH₂-CH₂-O) ₄-C₁₄H₂₉, HO-(CH₂-CH₂-O)₅-C₁₄H₂₉, HO-(CH₂-CH₂-O)₆-C₁₄H₂₉, HO-(CH₂-CH₂-O)₇-C₁₄H₂₉, HO-(CH₂-CH₂-O)₈-C₁₄H₂₉, HO-(CH₂-CH₂-O)₉- C₁₄H₂₉,
HO- (CH₂-CH₂-O) ₂-C₁₅H₃₁, HO- (CH₂-CH₂-O) ₃-C₁₅H₃₁ , HO- (CH₂-CH₂-O) ₄-C₁₅H₃₁, HO-(CH₂-CH₂-O)₅-C₁₅H₃₁ HO-(CH₂-CH₂-O)₆-C₁₅H₃₁, HO-(CH₂-CH₂-O)₇-C₁₅H₃₁, HO-(CH₂-CH₂-O)₈-C₁₅H₃₁ oder HO-(CH₂-CH₂-O)₉-C₁₅H₃₁.

Die Reaktion kann bevorzugt unter Luft- und Wasserausschluß durchgeführt werden.

Es können dem Reaktionsgemisch vor, während oder am Ende der Reaktion Additive zugesetzt werden.

Die Additive können eine Verlängerung der Standzeit der verwendeten Katalysatoren bewirken. Die Additive können eine einfachere oder verbesserte Handhabung der verwendeten Katalysatoren bewirken. Die Additive können die Wiederverwendbarkeit der verwendeten Katalysatoren erhöhen. Die Additive können die Wirtschaftlichkeit des Verfahrens verbessern.

Additive können schwefelorganische Verbindungen, Titanalkoxylate, Amine, Wasser, organische bzw. anorganische Säuren oder Basen oder Mischungen der vorgenannten Verbindungen sein.

Additive können Carbonsäuren, DMSO, Monoalkylamine, Dialkylamine oder Trialkylamine sein. Additve können Ti(OC₄H₉)₄ oder Ti(OC₃H₇)₄ sein.

Es können im Reaktionsgemisch Nebenprodukte und/oder Verunreinigungen enthalten sein, die in einem vorhergehenden Verfahrensschritt bei der Herstellung der Bis(alkoxysilylorganyl)polysulfide entstanden sind.

Die Nebenprodukte und/oder Verunreinigungen können die Komplexität und den Aufwand des Gesamtverfahrens aus Herstellung der Bis(alkoxysilylorganyl)polysulfide und Hydrierung verringern. Die Anwesenheit von Nebenprodukten und/oder Verunreinigungen kann die Folge der Einsparung eines Abtrennschrittes während der Aufarbeitung der als Ausgangsstoff für die Hydrierung eingesetzten Bis(alkoxysilylorganyl)polysulfide sein.

Nebenprodukte und/oder Verunreinigungen können Alkalihalogenide, bevorzugt Natriumchlorid und Kaliumchlorid, sein.

Die Hydrierung kann man bei einem Wasserstoffdruck von 5 bis 250 bar, bevorzugt 5 bis 99 bar, besonders bevorzugt 5 bis 55 bar, ganz besonders bevorzugt 5 bis 40 bar, Überdruck durchführen.

Die Hydrierung kann man bei einer Temperatur von 50 bis 250°C, bevorzugt 75 bis 189°C, besonders bevorzugt 100 bis 175°C, ganz besonders bevorzugt 110 bis 160°C, durchführen.

Die Zeit für die Hydrierreaktion kann weniger als 360 Minuten, bevorzugt weniger als 300 Minuten, besonders bevorzugt weniger als 240 Minuten, ganz besonders bevorzugt weniger als 180 Minuten, betragen.

Die Dotierungskomponente des dotierten Metallkatalysators kann mindestens ein Metall oder/und mindestens eine Metallverbindung sein.

Der dotierte Metallkatalysator kann ein Gemisch sein, das aus mindestens einer Substanz aus der Gruppe Eisen, Eisenverbindung, Nickel, Nickelverbindung, Palladium, Palladiumverbindung, Osmium, Osmiumverbindung, Ruthenium, Rutheniumverbindung, Rhodium, Rhodiumverbindung, Iridium oder Iridiumverbindung und mindestens einem Metall oder/und mindestens einer Metallverbindung besteht, die unabhängig voneinander elementar, legiert, chemisch gebunden oder physikalisch gemischt vorliegen.

Die Substanz aus der Gruppe Eisen, Eisenverbindung, Nickel, Nickelverbindung, Palladium, Palladiumverbindung, Osmium, Osmiumverbindung, Ruthenium, Rutheniumverbindung, Rhodium, Rhodiumverbindung, Iridium oder Iridiumverbindung unterscheidet sich von der Dotierungskomponente des dotierten Metallkatalysators.

Die Dotierungskomponente des dotierten Metallkatalysators kann aus mindestens einem Metall oder/und mindestens einer Metallverbindung bestehen, die sich von der Substanz aus der Gruppe Eisen, Eisenverbindung, Nickel, Nickelverbindung, Palladium, Palladiumverbindung, Osmium, Osmiumverbindung, Ruthenium, Rutheniumverbindung, Rhodium, Rhodiumverbindung, Iridium oder Iridiumverbindung unterscheidet.

Die Dotierungskomponente kann durch Absorption, Adsorption oder Abscheidung auf dem dotierten Metallkatalysator aufgebracht sein.

Der dotierte Metallkatalysator kann ein Gemisch sein, das aus mindestens zwei Metallen oder/und Metallverbindungen besteht, wobei die katalytisch aktive Spezies erst während der Hydrierung aus Vorstufen (Precursoren) gebildet werden.

Die Dotierungskomponente für die dotierten Metallkatalysatoren kann
Alkalimetalle oder Alkalimetallverbindungen, bevorzugt auf Basis Li, Na, K oder Rb,
Erdalkalimetalle oder Erdalkaliverbindungen, bevorzugt auf Basis Be, Mg, Ca, Sr oder Ba,
Elemente der 3. Hauptgruppe und Verbindungen der 3. Hauptgruppe, bevorzugt auf Basis B, A1, Ga oder In, Elemente der 4. Hauptgruppe und Verbindungen der 4. Hauptgruppe, bevorzugt auf Basis C, Si, Ge, Sn oder Pb, Elemente der 5. Hauptgruppe und Verbindungen der 5. Hauptgruppe, bevorzugt auf Basis N, P, As oder Sb,
Elemente der 6. Hauptgruppe und Verbindungen der 6. Hauptgruppe, bevorzugt auf Basis 0, S, Se oder Te,
Elemente der 7. Hauptgruppe und Verbindungen der 7. Hauptgruppe, bevorzugt auf Basis F, Cl, Br oder I, Nebengruppenelemente und Verbindungen der Nebengruppenelemente, bevorzugt auf Basis Sc, Y, Ti, Zr, Hf, V, Nb, Ta, Cr, Mo, W, Mn, Re, Fe, Ru, Co, Rh, Ir, Ni, Pd, Pt, Cu, Ag, Au, Zn oder Cd,
Elemente der Lanthanoidengruppe und Verbindungen der Lanthanoiden, bevorzugte auf Basis von Lanthan, Cer, Praesodymium, Neodymium, Samarium, Europium, Gadolinium, Ytterbium oder Lutetium,
enthalten.

Die Dotierungskomponente kann rutheniumoxid-, nickeloxid-und palladiumoxidfrei sein.

Die Dotierungskomponente kann vom Katalysatorträgermaterial verschieden sein.

Bevorzugte Dotierungskomponente kann ein Hydrid, Oxid, Halogenid, beispielsweise Fluorid, Chlorid, Bromid oder Iodid, Sulfid oder Nitrid sein.

Die dotierten Metallkatalysatoren können bevorzugt, als Substanz Hydride, Oxide, Halogenide, Sulfide und/oder Nitride von Fe, Ni, Ru, Rh, Pd, Os oder Ir enthalten.

Die dotierten Metallkatalysatoren können bevorzugt, als Dotierungskomponente Hydride, Oxide, Halogenide, Sulfide und/oder Nitride von Fe, Ni, Ru, Rh, Pd, Os oder Ir enthalten.

Die Dotierungskomponente kann bevorzugt Oxide, beispielsweise Nickeloxid, Eisenoxid, Rutheniumoxid, Rhodiumoxid, Osmiumoxid, Iridiumoxid und Palladiumoxid, enthalten.

Die Dotierungskomponente kann bevorzugt Sulfide, beispielsweise Nickelsulfid, Eisensulfid, Rutheniumsulfid, Rhodiumsulfid, Osmiumsulfid, Iridiumsulfid und Palladiumsulfid, enthalten.

Die dotierten Metallkatalysatoren können poröse Skelettkatalysatoren vom Raney-Typ sein, die mit Übergangsmetallen und/oder Übergangsmetallverbindungen, beispielsweise Molybdän, dotiert sind.

Die dotierten Metallkatalysatoren können poröse, aktivierte Metallkatalysatoren vom Raney-Typ sein, die mit Übergangsmetallen und/oder Übergangsmetallverbindungen, beispielsweise Molybdän, dotiert sind.

Die dotierten Metallkatalysatoren können bevorzugt aktivierte Nickelmetallkatalysatoren vom Raney-Typ sein, die mit Übergangsmetallen und/oder Übergangsmetallverbindungen, beispielsweise Molybdän, dotiert sind.

Beispielsweise können als dotierte Metallkatalysatoren die Katalysatoren BK 111 W (aktivierter Metallkatalysator auf Nickelbasis, dotiert mit <5 Gew.-% Molybdän) und BK 113 W (aktivierter Metallkatalysator auf Nickelbasis, dotiert mit <5 Gew.-% Molybdän) der Degussa AG eingesetzt werden.

Der Gewichtsanteil der Dotierungskomponente (elementar oder als chemische Verbindung vorliegend) kann, bezogen auf das Gewicht des dotierten Metallkatalysators, 0,00001 bis 80 Gew.-%, bevorzugt 0,0001 bis 50 Gew.-%, besonders bevorzugt 0,001 bis 15 Gew.-%, ganz besonders bevorzugt 0,01 bis 7,5 Gew.-%, betragen.

Die Dotierungskomponente kann mit der Substanz des dotierten Metallkatalysators und/oder deren Precursoren und/oder dem Katalysatorträgermaterial eine physikalische Mischung bilden.

Die Dotierungskomponente kann mit der Substanz des dotierten Metallkatalysators und/oder deren Precursoren und/oder dem Katalysatorträgermaterial eine chemische Verbindung bilden.

Die Dotierungskomponente kann mit der Substanz des dotierten Metallkatalysators und/oder deren Precursoren eine Legierung bilden.

Die Dotierungskomponente kann mit der Substanz des dotierten Metallkatalysators bzw. deren Precursoren Mischkristalle bilden.

Der dotierte Metallkatalysator kann aus feinverteilten, ungeträgerten, aktivierten Metallen und/oder Metallverbindungen bestehen.

Der dotierte Metallkatalysator kann auf einem der bekannten und üblichen Katalysator-Trägermaterialien, wie beispielsweise Diatomeenerde (Kieselgur), Kohlenstoff, Kieselsäure, Aktivkohlen, Tonerde oder Alumosilicat, aufgebracht sein.

Die Substanz des dotierten Metallkatalysators sowie die Dotierungskomponente können auf einem der bekannten und üblichen Katalysator-Trägermaterialien, wie beispielsweise Diatomeenerde (Kieselgur), Kohlenstoff, Kieselsäure, Aktivkohlen, Tonerde oder Alumosilicat, gemeinsam, separat oder nacheinander aufgebracht werden.

Die dotierten Metallkatalysatoren können als Feststoff, in Suspension oder eingebettet in Wachse oder Öle für die Reaktion eingesetzt werden.

Die Katalysatorkonzentration, bezogen auf die molare Menge der Substanz des dotierten Metallkatalysators, kann 0,0001 bis 1 mmol pro 1 g Bis(alkoxysilylorganyl)polysulfid betragen.

Vorzugsweise kann für Nickel und Eisen die Konzentration, bezogen auf die Substanzmenge des dotierten Metallkatalysators, von 0,001 bis 1 mmol, besonders bevorzugt 0,01 bis 1 mmol, ganz besonders bevorzugt 0,05 bis 0,5 mmol, pro 1 g Bis(alkoxysilylorganyl)polysulfid betragen.

Vorzugsweise kann für Ruthenium, Rhodium, Osmium oder Iridium die Konzentration, bezogen auf die Substanzmenge des dotierten Metallkatalysators, von 0,0001 bis 1 mmol, besonders bevorzugt 0,005 bis 0,5 mmol, ganz besonders bevorzugt 0,005 bis 0,1 mmol, pro 1 g Bis(alkoxysilylorganyl)polysulfid betragen.

Vorzugsweise kann für Palladium die Konzentration, bezogen auf die Substanzmenge des dotierten Metallkatalysators, von 0,0001 bis 1 mmol, besonders bevorzugt 0,005 bis 1 mmol, ganz besonders bevorzugt 0,01 bis 0,5 mmol, pro 1 g Bis(alkoxysilylorganyl)polysulfid betragen.

Als Parameter für den Vergleich der Geschwindigkeit der Hydrogenolyse bei einer gegebenen Temperatur T und einem konstanten Druck p kann der durch die Beziehung "gebildetes Produkt in g" pro "mmol Substanz des dotierten Metallkatalysators" pro "Minute" quantitativ ausdrückbare Gew.-Umsatz dienen.

Als weiterer Parameter für den Vergleich der Geschwindigkeit der Hydrogenolyse bei einer gegebenen Temperatur T und einem konstanten Druck p kann der durch die Beziehung "gebildetes Produkt in mmol" pro "mmol Substanz des dotierten Metallkatalysators" pro "Minute" quantitativ ausdrückbare Mol.-Umsatz dienen.

Kann der Umsatz bei niedrigeren Temperaturen und/oder niedrigeren Drücken gesteigert werden, stellt das in ökologischer, energetischer und wirtschaftlicher Hinsicht eine wesentliche Verbesserung dar.

Der Gew.-Umsatz kann 0,001 bis 10 g Mercaptoorganyl-(alkoxysilan) pro 1 mmol dotiertem Metall oder Metallverbindung pro Minute betragen.

Der Mol.-Umsatz kann 0,001 bis 50 mmol Mercaptoorganyl-(alkoxysilan) pro 1 mmol dotiertem Metall pro Minute betragen.

Vorzugsweise kann für die Substanz des dotierten Metallkatalysators Nickel, Ruthenium, Rhodium, Iridium oder Palladium der Gew.-Umsatz 0,001 bis 10 g, besonders bevorzugt 0,01 bis 10 g, ganz besonders bevorzugt 0,1 bis 10 g Mercaptoorganyl(alkoxysilan) pro 1 mmol dotiertem Metall pro Minute betragen.

Vorzugsweise kann für die Substanz des dotierten Metallkatalysators Nickel, Ruthenium, Rhodium, Iridium oder Palladium der Mol.-Umsatz 0,001 bis 50 mmol, bevorzugt 0,01 bis 40 mmol, besonders bevorzugt 0,05 bis 30 mmol, ganz besonders bevorzugt 0,1 bis 20 mmol, Mercaptoorganyl-(alkoxysilan) pro 1 mmol dotiertem Metall pro Minute betragen.

Mit dem erfindungsgemäßen Verfahren können mehr als 80 Gew.-%, bevorzugt mehr als 83 Gew.-%, besonders bevorzugt mehr als 86 Gew.-%, ganz besonders bevorzugt mehr als 90 Gew.-%, der eingesetzten Bis(alkoxysilylorganyl)polysulfide in ein Mercaptoorganyl(alkoxysilan) umgesetzt werden.

Mit dem erfindungsgemäßen Verfahren kann der relative Anteil (mol-%) des in den eingesetzten Bis(alkoxysilylorganyl)polysulfiden enthaltenen Bis (alkoxysilylorganyl) monosulfids konstant bleiben.

Bei dem erfindungsgemäßen Verfahren kann der relative Anteil des im Edukt enthaltenen Bis(alkoxysilylorganyl)monosulfids <10 Gew.-%, vorzugsweise <8 Gew.-%, besonders bevorzugt <6 Gew.-%, ganz besonders bevorzugt <4 Gew.-% , sein.

Bei dem erfindungsgemäßen Verfahren kann es sich um ein Batchverfahren oder um ein kontinuierliches Verfahren handeln.

Bei dem Batchverfahren kann es sich um ein Slurry-Verfahren oder Suspensionsverfahren, zum Beispiel in Rührautoklaven oder Buss-Reaktoren, handeln.

Bei den kontinuierlichen Verfahren kann es sich um Slurry-Verfahren mit kontinuierlicher Flüssigkeits- und Gaszufuhr handeln.

Bei dem kontinuierlichen Verfahren können bekannte Reaktoren für Gas/Flüssig/Fest-Reaktionen zum Einsatz kommen. Typische Vertreter für Festbettreaktoren können der Riesel- und Sumpfreaktor, für Suspensionsreaktoren der Rührkessel, die Blasensäule und das Fließbett sein.

Das erfindungsgemäße Verfahren hat den Vorteil, dass bei der Verwendung von dotierten Katalysatoren, höhere Umsätze erhalten werden, als wenn undotierte Katalysatoren zum Einsatz kommen.

Es können im Vergleich zum Stand der Technik (US 6.433.206) bei der Verwendung von dotierten Katalysatoren metall- oder substratspezifisch höhere Umsätze bei milderen Temperaturen und/oder Drücken erhalten werden. Durch einen höheren Umsatz wird nicht nur die Raum-Zeit-Ausbeute erheblich verbessert, sondern auch der spezifische Energieverbrauch für die Herstellung von Mercaptoorganyl (alkoxysilanen) durch reduktive Spaltung mit H₂ aus Bis (alkoxysilylorganyl) polysulfiden verringert. Durch einen geringeren Energieverbrauch und mildere Reaktionsbedingungen wird die Anlage weniger beansprucht, es resultiert unter anderem ein geringerer Verschleiß und Wartungsaufwand. Durch einen geringeren Energieverbrauch bei der Herstellung von Mercaptoorganyl(alkoxysilanen) wird die Energiebilanz des Prozesses verbessert und die Umwelt geringer belastet. Die Komplexität von technischen Anlagen nimmt im Allgemeinen mit niedrigeren Prozesstemperaturen und Prozessdrücken ab.

### Beispiele:

In Tabelle 1 sind Beispiele aus US 6,433,206 aufgeführt. Als Polysulfansilan wird ein nicht näher spezifiziertes Disulfansilan-Gemisch, daß hauptsächlich Bis(3-triethoxysilylpropyl)disulfid enthält, eingesetzt.

Eine Bildung von Nebenprodukten wird nicht beschrieben. Die Produktanalytik erfolgt mit gaschromatographischen Methoden bzw. Verfahren.

In Tabelle 2 ist als Vergleichsbeispiel 1 die Verwendung eines undotierten Paladiumkatalysators bei 155°C und 51 bar beschrieben.

Um eine gute Vergleichbarkeit der Ergebnisse zu erreichen, werden die Gew.-% in den Vergleichsbeispielen in Tabelle 1 und 2 um die Alkoholanteile der Produktlösung korrigiert (Bsp.: Eine 50%ige Produktlösung aus Alkohol und Silan enthält 25 Gew.-% Mercaptosilan und 25 Gew.-% Disulfansilan. D.h. die Silanbestandteile des Produktes sind zu 50 Gew.-% Mercaptosilan und zu 50 Gew.-% Disulfansilan).

Die angegebenen Gewichtsprozente der Silanbestandteile in den Tabellen 3-4 sind bezüglich des Alkoholanteils der Lösungen ebenfalls korrigiert.

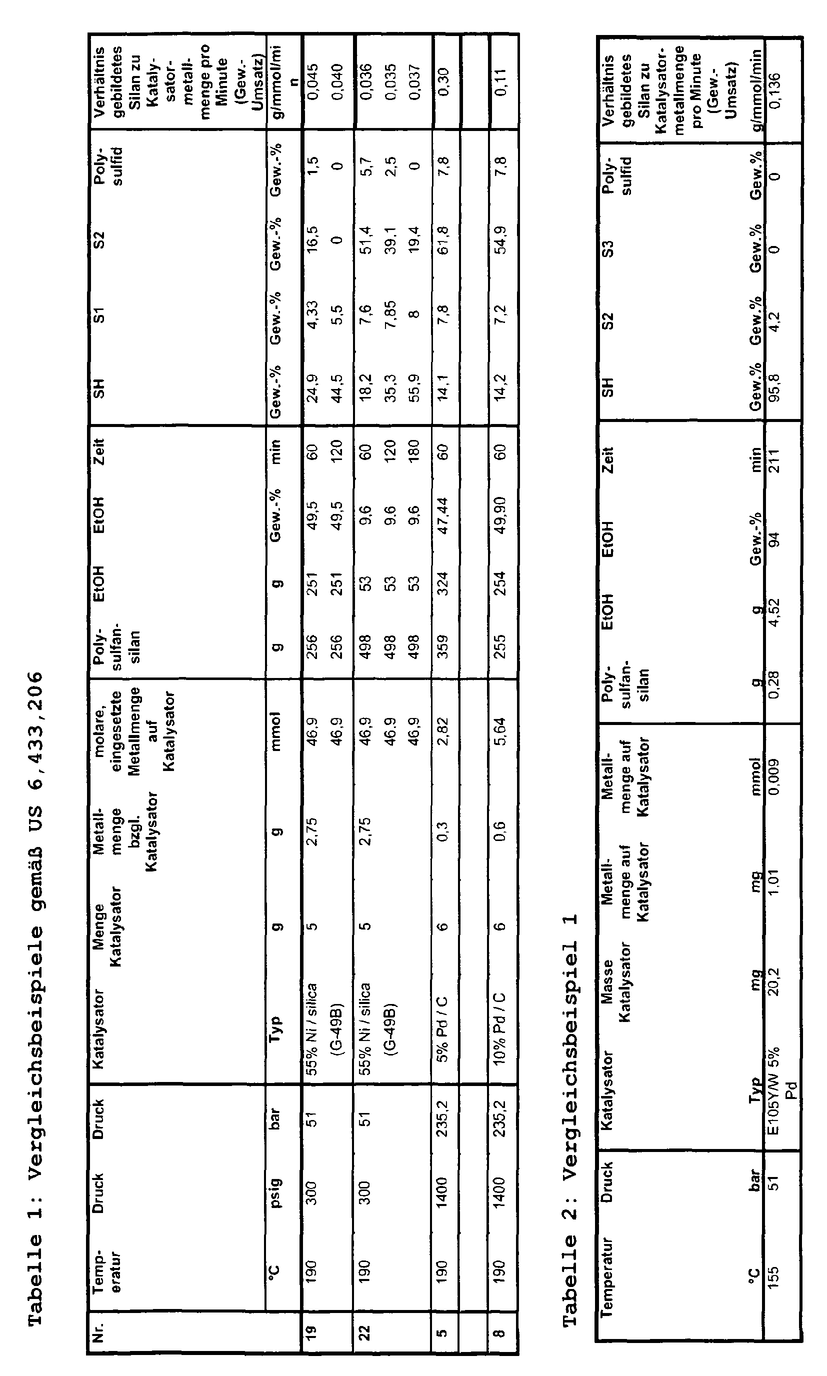

In den Tabellen 3 und 4 sind die erfindungsgemäßen Beispiele auf Basis eines Disulfansilans (Si 266 = Handelsprodukt der Degussa AG = [Bis(triethoxysilylpropyl)disulfid]) zusammengefaßt. In einer Apparatur, die aus 8 parallel mittels Ölbad beheizten Autoklaven besteht, deren Reaktorvolumen je 20 ml beträgt und die mit ankerförmigen Magnetrührern, die auf einer in der Reaktormitte befindlichen feststehenden Welle mit 1300 U/min rotieren, ausgestattet sind, wird gemäß den Bedingungen und Verhältnissen in Tabelle 3 und 4 Si 266 katalytisch hydriert.

Die Reaktion wird nach den angegebenen Zeiten beendet. Die Produktzusammensetzung wird mittels ¹H-NMR ermittelt.

Der Umsatz wird aus der per ¹H-NMR ermittelten Produktzusammensetzung ermittelt.

Die mit HPLC ermittelte durchschnittliche Kettenlänge der Polysulfanmischung beträgt 2,14 (berücksichtigt wird nur der mit HPLC bestimmte Mittelwert von S2-S14). Das sich daraus ergebende durchschnittliche Molekulargewicht für Si 266 ist 479 g/mol.

In den Spalten "Produktzusammensetzung" in Tabelle 3 und
4. werden nur die Komponenten
3-Mercaptopropyl(triethoxysilan),
Bis(triethoxysilylpropyl)disulfid,
Bis(triethoxysilylpropyl)trisulfid und
Bis(triethoxysilylpropyl)polysulfid (Sx mit x >3) berücksichtigt. Bis(triethoxysilylpropyl)monosulfid und 3-Chlorpropyl(triethoxysilan) sind vernachlässigt.

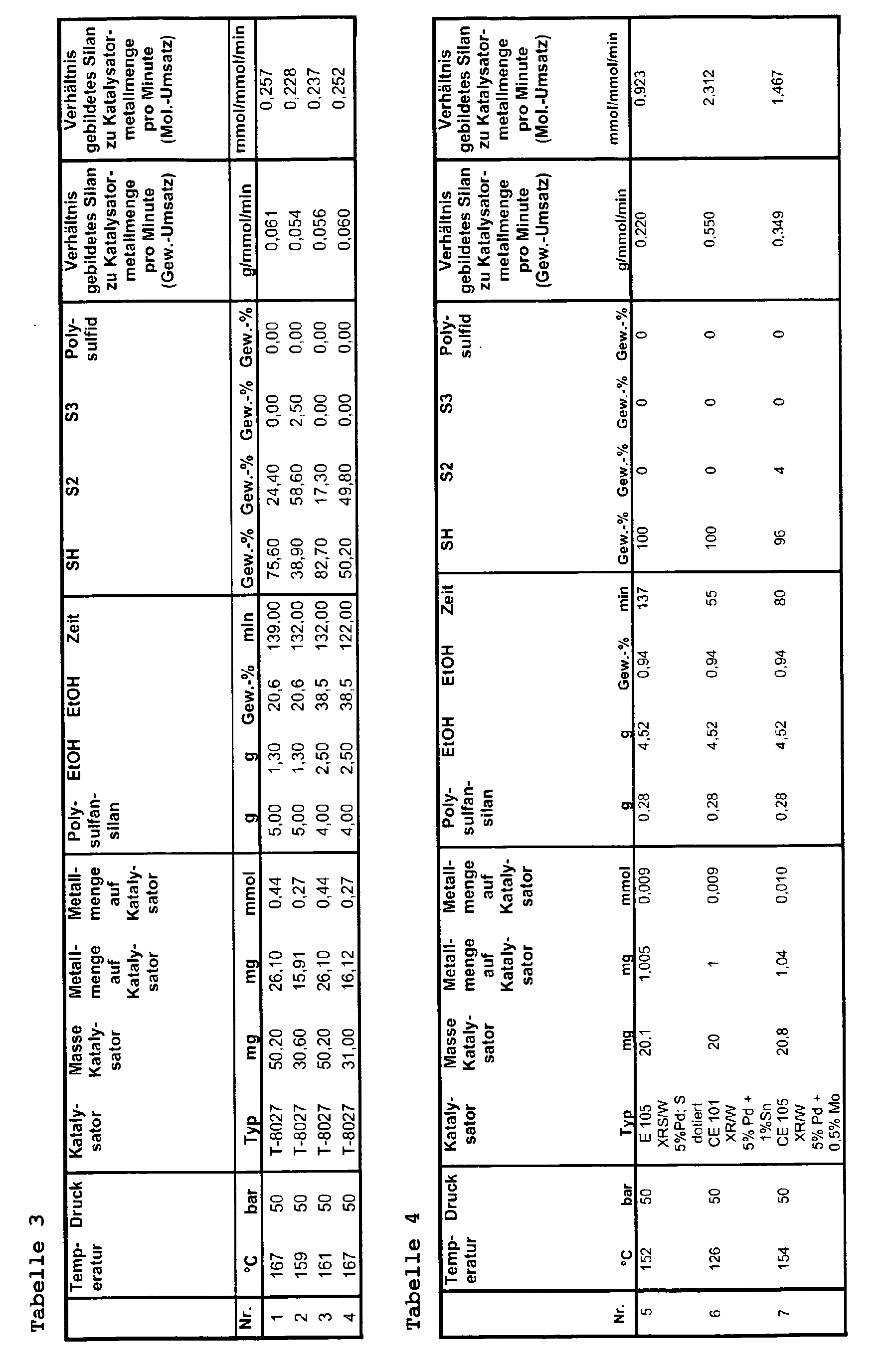

Die in den Tabellen enthaltenen Abkürzungen bedeuten:
SH = 3-Mercaptopropyl(triethoxysilan),
S2 = Bis(triethoxysilylpropyl)disulfid,
S3 = Bis(triethoxysilylpropyl)trisulfid,
Polysulfid = Bis(triethoxysilylpropyl)polysulfid (Sx mit x>3).

Bei den Katalysatoren mit den Kurzbezeichnungen
E 105 Y/W 5% Pd
E 105 XRS/W 5% Pd; S dotiert
CE 101 XR/W 5% Pd + 1% Sn
CE 105 XR/W 5% Pd + 0,5% Mo
handelt es sich um Handelsprodukte der Degussa AG, die durch Aufbringung einer Edelmetallkomponente, wie zum Beispiel Palladium, auf einem porösen, hochoberflächigen Trägermaterial hergestellt werden. Die Katalysatoren werden als pulverförmige, rieselfähige Feststoffe eingesetzt. Die genannten Katalysatoren sind auf Aktivkohlen geträgert. Die Katalysatoren mit den u.g. Kurzbezeichnungen enthalten folgende Mengen an aktivem Metall:
E 105 Y/W 5% Pd = 5% Pd bezüglich der Trockenmasse des Katalysators
E 105 XRS/W 5% Pd = 5% Pd bezüglich der Trockenmasse des Katalysators
CE 101 XR/W 5% Pd + 1% Sn = 5% Pd bezüglich der Trockenmasse des Katalysators
CE 105 XR/W 5% Pd + 0,5% Mo = 5% Pd bezüglich der Trockenmasse des Katalysators

Die Katalysatoren mit den u.g. Kurzbezeichnungen enthalten folgende Mengen Dotierungskomponente:
E 105 XRS/W 5% Pd = dotiert mit S
CE 101 XR/W 5% Pd + 1% Sn = dotiert mit 1% Sn
CE 105 XR/W 5% Pd + 0,5% Mo = dotiert mit 0,5% Mo.

Die Katalysatoren G-49 B und T 8027 sind Handelsprodukte der Süd-Chemie AG.

Der Katalysator G-49 B enthält 55% Nickel und ist undotiert.

Der Katalysator T 8027 enthält 52% Nickel und ist mit 2,4% Zirkonium dotiert.

Für die Analyse der Produkte wird ein DRX 500 NMR-Gerät der Firma Bruker gemäß den dem Fachmann bekannten Regeln und Bedienvorschriften verwendet. Die Messfrequenzen sind 99,35 MHz für ²⁹Si-Kerne und 500,13 MHz für ¹H-Kerne. Als Referenz dient Tetramethylsilan (TMS).

Die Analyse von Bis(alkoxysilylorganyl)polysulfiden und deren Gemischen kann mit GC und HPLC erfolgen (U. Görl, J. Münzenberg, D. Luginsland, A. Müller Kautschuk Gummi Kunststoffe 1999, 52(9), 588, D. Luginsland Kautschuk Gummi Kunststoffe 2000, 53(1-2), 10, M. W. Backer et al, Polymer Preprints 2003, 44(1), 245).

Aus den in den Tabellen 1 bis 4 aufgeführten Daten wird deutlich, dass die Verwendung von dotierten Metallkatalysatoren mindestens gleich hohe Umsätze bei energieschonenderen Bedingungen im Vergleich zum Stand der Technik (US 6,433,206) erlaubt.

Die Dotierung von Palladium mit Schwefel, Zinn oder Molybdän führt dazu, dass zum Teil höhere Umsätze bei energieschonenderen, bzw. ähnlichen Bedingungen erreicht werden.

Die Dotierung von Nickel mit Zirkonium führt beispielsweise zu einer Erhöhung der Umsätze bei energieschonenderen Bedingungen im Vergleich zum Stand der Technik (US 6,433,206).

## Patentansprüche

1. Verfahren zur Herstellung von Mercaptoorganyl-(alkoxysilanen), wobei man Bis(alkoxysilylorganyl)-polysulfide mit Wasserstoff in Gegenwart von mindestens einem Alkohol und einem dotierten Metallkatalysator hydriert, **dadurch gekennzeichnet, dass** der dotierte Metallkatalysator mindestens eine Substanz aus der Gruppe Eisen, Eisenverbindung, Nickel, Nickelverbindung, Palladium, Palladiumverbindung, Osmium, Osmiumverbindung, Ruthenium, Rutheniumverbindung, Rhodium, Rhodiumverbindung, Iridium oder Iridiumverbindung und mindestens eine Dotierungskomponente enthält.

2. Verfahren zur Herstellung von Mercaptoorganyl-(alkoxysilanen) nach Anspruch 1, **dadurch gekennzeichnet, daß** die Mercaptoorganyl (alkoxysilane) Verbindungen der allgemeinen Formel (II)
W-A-SH (II)
sind, wobei
W gleich SiY¹Y²Y³ oder Si (OCH₂-CH₂-)₃N ist und
Y¹, Y², Y³ jeweils unabhängig voneinander bedeuten können Hydroxy (-OH), eine lineare, verzweigte oder ringförmige Kohlenwasserstoffkette mit 1-18 Kohlenstoffatomen (C1-C18), lineare oder verzweigte Alkylsäuregruppe (CₐH₂ₐ₊₁) -C (=O)O- mit a=1-25, lineare oder verzweigte Alkenylsäuregruppe (C_{b}H_{2b-1}) -C (=O) O- mit b=2-25, lineare oder verzweigte substituierte Alkyl-oder Alkenylsäuregruppe, unsubstituierter, halogen-oder alkylsubstituierter Cycloalkanrest mit 5-12 Kohlenstoffatomen, Benzylrest, ein halogen- oder alkylsubstituierter Phenylrest, lineare oder verzweigte Alkoxygruppe, Cycloalkoxygruppe mit 5-12-Kohlenstoffatomen, halogen- oder alkylsubstituierte Phenoxy- oder Benzyloxygruppe, Alkylethergruppe O-(CR^{I}₂-CR^{I}₂)-O-Alk oder Alkylpolyethergruppe O- (CR^{I}₂-CR^{I}₂O)_{y}-Alk, mit y = 2-25 und R^{I} unabhängig voneinander H oder Alkylgruppe ist, Alk gleich eine lineare oder verzweigte, gesättigte oder ungesättigte Alkylkette mit 1-30 Kohlenstoffatomen (C1-C30) ist, A eine lineare oder verzweigte, gesättigte oder ungesättigte aliphatische, aromatische oder gemischt aliphatische/aromatische zweibindige C1-C30 Kohlenwasserstoffkette ist.

3. Verfahren zur Herstellung von Mercaptoorganyl-(alkoxysilanen) nach Anspruch 2, **dadurch gekennzeichnet, daß** die Mercaptoorganyl(alkoxysilane) Mischungen von Verbindungen der allgemeinen Formel II sind.

4. Verfahren zur Herstellung von Mercaptoorganyl-(alkoxysilanen) nach den Ansprüchen 1 und 2, **dadurch gekennzeichnet, daß** man die Hydrierung bei einem Druck zwischen 5 und 250 bar durchführt.

5. Verfahren zur Herstellung von Mercaptoorganyl-(alkoxysilanen) nach den Ansprüchen 1 und 2, **dadurch gekennzeichnet, daß** man die Hydrierung bei einer Temperatur zwischen 50 und 250°C durchführt.

6. Verfahren zur Herstellung von Mercaptoorganyl-(alkoxysilanen) nach den Ansprüchen 1 bis 5, **dadurch gekennzeichnet, daß** die Menge der Dotierungskomponente, bezogen auf das Gewicht des dotierten Metallkatalysators, 0,00001 bis 80 Gew.-% beträgt.

7. Verfahren zur Herstellung von Mercaptoorganyl-(alkoxysilanen) nach den Ansprüchen 1 bis 5, **dadurch gekennzeichnet, daß** die Substanz des dotierten Metallkatalysators 0,0001 bis 1 mmol pro 1 g Bis(alkoxysilylorganyl)polysulfid beträgt.

8. Verfahren zur Herstellung von Mercaptoorganyl-(alkoxysilanen) nach den Ansprüchen 1 bis 7, **dadurch gekennzeichnet, daß** man den dotierten Metallkatalysator als Feststoff, in Suspension oder eingebettet in Wachse oder Öle einsetzt.

9. Verfahren zur Herstellung von Mercaptoorganyl-(alkoxysilanen) nach Anspruch 1, **dadurch gekennzeichnet, daß** der Alkohol in einem Anteil von 0,01 bis 95 Gew.-%, bezogen auf das Gesamtgewicht von Bis(alkoxysilylorganyl)polysulfiden und Alkohol, eingesetzt wird.

10. Verfahren zur Herstellung von Mercaptoorganyl-(alkoxysilanen) nach Anspruch 1, **dadurch gekennzeichnet, daß** die Reaktionsmischung Additive enthält.

11. Verfahren zur Herstellung von Mercaptoorganyl-(alkoxysilanen) nach Anspruch 1, **dadurch gekennzeichnet, daß** der Gew.-Umsatz 0,001 bis 10 g Mercaptoorganyl(alkoxysilan) pro 1 mmol Substanz des dotierten Metallkatalysators pro Minute beträgt.

12. Verfahren zur Herstellung von Mercaptoorganyl-(alkoxysilanen) nach Anspruch 1, **dadurch gekennzeichnet, daß** der Mol.-Umsatz 0,001 bis 50 mmol Mercaptoorganyl (alkoxysilan) pro 1 mmol Substanz des dotierten Metallkatalysators pro Minute beträgt.

## Claims

1. Process for preparing mercaptoorganyl (alkoxysilanes), by hydrogenating bis(alkoxysilylorganyl) polysulphides with hydrogen in the presence of at least one alcohol and a doped metal catalyst, **characterized in that** the doped metal catalyst comprises at least one substance from the group consisting of iron, iron compound, nickel, nickel compound, palladium, palladium compound, osmium, osmium compound, ruthenium, ruthenium compound, rhodium, rhodium compound, iridium and iridium compound plus at least one doping component.

2. Process for preparing mercaptoorganyl(alkoxysilanes) according to Claim 1, **characterized in that** the mercaptoorganyl(alkoxysilanes) are compounds of the general formula (II)
W-A-SH (II)
wherein
W is SiY¹Y²Y³ or Si(OCH₂-CH₂-)₃N and
Y¹, Y², Y³ each independently of one another may be hydroxyl (-OH), a linear, branched or cyclic hydrocarbon chain having 1-18 carbon atoms (C1-C18), a linear or branched alkyl acid group (CₐH₂ₐ+₁) - C(=O)O- with a=1-25, a linear or branched alkenyl acid group (C_{b}H_{2b}-₁) -C (=O) O- with b=2-25, a linear or branched substituted alkyl or alkenyl acid group, an unsubstituted, halogen-substituted or alkyl-substituted cycloalkane radical having 5-12 carbon atoms, benzyl radical, a halogen-substituted or alkyl-substituted phenyl radical, a linear or branched alkoxy group, a cycloalkoxy group having 5-12 carbon atoms, a halogen-substituted or alkyl-substituted phenoxy or benzyloxy group, an alkyl ether group 0- (CR^{I}₂-CR^{I}₂) -O-Alk or alkyl polyether group O- (CR^{I}₂-CR^{I}₂O)_{y}-Alk, with y = 2-25 and R^{I} independently at each occurrence is H or alkyl group, Alk being a linear or branched, saturated or unsaturated alkyl chain having 1-30 carbon atoms (C1-C30), and
A is a linear or branched, saturated or unsaturated aliphatic, aromatic or mixedly aliphatic/aromatic divalent C1-C30 hydrocarbon chain.

3. Process for preparing mercaptoorganyl(alkoxysilanes) according to Claim 2, **characterized in that** the mercaptoorganyl(alkoxysilanes) are mixtures of compounds of the general formula II.

4. Process for preparing mercaptoorganyl(alkoxysilanes) according to Claims 1 and 2, **characterized in that** the hydrogenation is carried out at a pressure of between 5 and 250 bar.

5. Process for preparing mercaptoorganyl(alkoxysilanes) according to Claims 1 and 2, **characterized in that** the hydrogenation is carried out at a temperature of between 50 and 250°C.

6. Process for preparing mercaptoorganyl(alkoxysilanes) according to Claims 1 to 5, **characterized in that** the amount of the doping component, based on the weight of the doped metal catalyst, is 0.00001% to 80% by weight.

7. Process for preparing mercaptoorganyl(alkoxysilanes) according to Claims 1 to 5, **characterized in that** the substance of the doped metal catalyst is 0.0001 to 1 mmol per g of bis(alkoxysilylorganyl) polysulphide.

8. Process for preparing mercaptoorganyl(alkoxysilanes) according to Claims 1 to 7, **characterized in that** the doped metal catalyst is used as a solid, in suspension or embedded in waxes or oils.

9. Process for preparing mercaptoorganyl (alkoxysilanes) according to Claim 1, **characterized in that** the alcohol is used in a fraction of 0.01% to 95% by weight, based on the total weight of bis(alkoxysilylorganyl) polysulphides and alcohol.

10. Process for preparing mercaptoorganyl(alkoxysilanes) according to Claim 1, **characterized in that** the reaction mixture comprises additives.

11. Process for preparing mercaptoorganyl (alkoxysilanes) according to Claim 1, **characterized in that** the weight conversion is 0.001 to 10 g of mercaptoorganyl(alkoxysilane) per mmol of substance of the doped metal catalyst per minute.

12. Process for preparing mercaptoorganyl (alkoxysilanes) according to Claim 1, **characterized in that** the molar conversion is 0.001 to 50 mmol of mercaptoorganyl(alkoxysilane) per mmol of substance of the doped metal catalyst per minute.

## Revendications

1. Procédé pour la préparation de mercaptoorganyl(alcoxysilanes) comprenant une étape d'hydrogénation de bis(alcoxy-silylorganil)polysulfures avec de l'hydrogène en présence d'au moins un alcool et d'un catalyseur métallique dopé, **caractérisé en ce que** le catalyseur métallique dopé comprend au moins une substance choisie dans le groupe constitué de fer, composé de fer, nickel, composé de nickel; palladium, composé de palladium, osmium, composé d'osmium, ruthénium, composé de ruthénium, rhodium, composé de rhodium, iridium et composé d'iridium et d'au moins un composant de dopage.

2. Procédé pour la préparation de mercaptoorganil(alcoxysilanes) selon la revendication 1, **caractérisé en ce que** les mercaptoorganil (alcoxysilanes) sont des composés répondant à la formule générale (II) :
W-A-SH (II)
dans laquelle :
W représente SiY¹Y²Y³ ou Si(OCH₂-CH₂-)₃N et
Y¹ ,Y², Y³ peuvent chacun indépendamment les uns des autres représenter un groupe hydroxy(-OH), une chaîne hydrocarbure linéaire, ramifiée ou cyclique comprenant 1 à 18 atomes de carbone (en C₁ à C₁₈), un groupe alkyle à fonction acide linéaire ou ramifié (CₐH₂ₐ₊₁)-C (=O) O-, a valant 1 à 25, un groupe alcényle à fonction acide linéaire ou ramifié (C_{b}H_{2b-1})-C(=O) O-, b valant 2 à 25, un groupe alkyle ou alcényle à fonction acide substitué linéaire ou ramifié, un radical cycloalcane non substitué, substitué par un halogène ou substitué par un alkyle, comprenant 5 à 12 atomes de carbone, un radical benzyle, un radical phényle substitué par un halogène ou substitué par un alkyle, un groupe alcoxy linéaire ou ramifié, un groupe cycloalcoxy comprenant 5 à 12 atomes de carbone, un groupe phénoxy ou benzyloxy substitué par un halogène ou substitué par un alkyle, un groupe éther d'alkyle O-(CR^{I}₂-CR^{I}₂)-O-alk, ou un groupe polyéther d'alkyle O-(CR^{I}₂-CR^{I}₂O)_{y}-alk, y valant 2 à 25, et R^{I} représentant indépendamment à chaque occurrence un atome d'hydrogène ou un groupe alkyle, alk étant une chaîne alkyle saturée ou non saturée, linéaire ou ramifiée, comprenant 1 à 30 atomes de carbone (en C₁ à C₃₀),
A représente une chaîne d'hydrocarbure en C₁ à C₃₀ bivalente aliphatique, aromatique ou de manière composite aliphatique/aromatique, saturée ou insaturée, linéaire ou ramifiée.

3. Procédé pour la préparation de mercaptoorganil(alcoxysilanes) selon la revendication 2, **caractérisé en ce que** les mercaptoorganil(alcoxysilanes) sont des mélanges de composés répondant à la formule générale (II).

4. Procédé pour la préparation de mercaptoorganil(alcoxysilanes) selon les revendications 1 et 2, **caractérisé en ce que** l'hydrogénation est conduite à une pression située entre 5 et 250 bars.

5. Procédé pour la préparation de mercaptoorganil(alcoxysilanes) selon les revendications 1 et 2, **caractérisé en ce que** l'hydrogénation est conduite à une température située entre 50 et 250°C.

6. Procédé pour la préparation de mercaptoorganil(alcoxysilanes) selon les revendications 1 à 5, **caractérisé en ce que** la quantité de composants de dopage est de 0,00001 % à 80 % en poids sur la base du poids du catalyseur métallique dopé.

7. Procédé pour la préparation de mercaptoorganil(alcoxysilanes) selon les revendications 1 à 5, **caractérisé en ce que** la substance du catalyseur métallique dopé est de 0,0001 à 1 mmol par gramme de bis(alcoxy-silylorganil)polysulfure.

8. Procédé pour la préparation de mercaptoorganil(alcoxysilanes) selon les revendications 1 à 7, **caractérisé en ce que** le catalyseur métallique dopé est utilisé sous forme solide, en suspension ou est incorporé dans des cires ou des huiles.

9. Procédé pour la préparation de mercaptoorganil(alcoxysilanes) selon la revendication 1, **caractérisé en ce que** l'alcool est utilisé en une fraction de 0,01 % à 95 % en poids sur la base du poids total des bis(alcoxy-silylorganil)polysulfures et de l'alcool.

10. Procédé pour la préparation de mercaptoorganil(alcoxysilanes) selon la revendication 1, **caractérisé en ce que** le mélange réactionnel contient des additifs.

11. Procédé pour la préparation de mercaptoorganil(alcoxysilanes) selon la revendication 1, **caractérisé en ce que** la conversion de poids par minute est de 0,001 à 10 g de mercaptoorganil(alcoxysilane) par mmol de substance du catalyseur métallique dopé.

12. Procédé pour la préparation de mercaptoorganil(alcoxysilanes) selon la revendication 1, **caractérisé en ce que** la conversion molaire par minute est de 0,001 à 50 mmol de mercaptoorganil(alcoxysilane) par mmol de substance du catalyseur métallique dopé.
